(19) Europäisches Patentamt / European Patent Office / Office européen des brevets

(11) **EP 2 824 844 B1**

(12) **EUROPEAN PATENT SPECIFICATION**

(45) Date of publication and mention of the grant of the patent:
**21.09.2016 Bulletin 2016/38**

(51) Int Cl.:
**H04B 3/46** *(2006.01)*    *H04B 3/30* *(2006.01)*
**H04M 3/30** *(2006.01)*

(21) Application number: **13305970.9**

(22) Date of filing: **08.07.2013**

(54) **Method and device for assessment of a telecommunication line**

Verfahren und Vorrichtung zur Beurteilung einer Telekommunikationsleitung

Procédé et dispositif pour l'évaluation d'une ligne de télécommunication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.01.2015 Bulletin 2015/03**

(73) Proprietor: **ALCATEL LUCENT**
**92100 Boulogne-Billancourt (FR)**

(72) Inventors:
- **Dardenne, Xavier**
  **5000 Namur (BE)**
- **Drooghaag, Benoît**
  **5000 Namur (BE)**

(74) Representative: **ALU Antw Patent Attorneys**
**Copernicuslaan 50**
**2018 Antwerpen (BE)**

(56) References cited:
**US-A1- 2009 225 821**

- **JDSU: "Application Note Detecting Bridged Tap and Noise Interference in VDSL2 Access Networks using the JDSU SmartClass(TM) TPS Test Challenge", , 18 May 2011 (2011-05-18), XP055092130, Retrieved from the Internet: URL:http://www.jdsu.com/productliterature/ sctpsbridgedtap_an_tfs_tm_ae.pdf [retrieved on 2013-12-06]**

## Description

### Field of the invention

The present invention refers to a method and a device for assessment of electrical characteristics of a telecommunication line. Furthermore, the invention refers to a monitoring station comprising such a device and a computer program product programmed for executing such a method.

### Background

In the recent years, the bit rates achieved on Digital Subscriber Lines (DSL) have increased considerably. The reasons for this bit rate increase are twofold. First, new innovative techniques for data transmission over the lines have been deployed by the network operators. Second, the spectrum used for data transmissions on the subscriber lines has been increased. However, along with the increase of the frequency ranges the theoretical performance limits of digital subscriber lines are approached. As a consequence, the new techniques applied for DSL transmission have become more sensitive to all kinds of noise and impairments. Line management and fault diagnosis tools are needed in order to deal with this increased sensitivity.

For instance, a bit rate limiting factor of the VDSL2 technology is the stationary noise, also known as crosstalk noise caused by coupling with neighboring lines. As differential signaling is used on the wire pair (twisted pair) of a DSL, the lines should be insensitive to crosstalk. However, electric characteristics of the two wires of a line may differ from each other due to limited manufacturing accuracy. Thus, a telecommunication line is typically not perfectly balanced and therefore sensitive to crosstalk at least to some extent. In order to avoid the adverse effect of crosstalk to the achievable bit rate on the line, crosstalk cancellation techniques like Vectoring can be applied. However, such crosstalk cancellation techniques work successfully for low or moderate crosstalk levels only.

Moreover, in cases of higher crosstalk levels (i.e. strong coupling of different lines with each other) or in case of moderate crosstalk but at higher frequency ranges, a resonance phenomena may occur between the coupled lines. The main consequence of such resonance phenomena is to create deep local minima (so called "dips") in the transfer function of the coupled lines. Hence, in some frequency bands around these resonances, signal transmission is at least almost impossible and the achievable gain provided by crosstalk cancelling techniques like Vectoring may be significantly reduced.

As vectoring requires the deployment of additional costly hardware in DSL Access Multiplexers (DSLAMs), it would be very interesting for network operators to know which line are suited for vectoring (i.e. are sufficiently balanced) before actually deploying the new hardware.

Accordingly, it would be interesting to be able to estimate whether or not a certain telecommunication line is suitable for future DSL technologies such as G.Fast. Because the future technologies apply signals with a rather high maximum frequency that may extend up to 100 MHz or even up to 200 MHz in later variants of these technologies, the telecommunication lines used in combination with these technologies need to be particularly well balanced.

It is known to assess the quality of existing telecommunication lines using special test heads. However, this approach is rather expensive. Another approach is to use Metallic Line Test (MELT). MELT can be operated directly from an already installed DSLAM and is therefore less expensive. However, test results generated by means of MELT are less accurate, and some unbalances could be missed by MELT while they already have a significant impact on DSL performance.

The application note "Detecting Bridged Tap and Noise Interference in VDSL2 Access Networks using the JDSU SmartClass TPS" issued by JDSU discloses detecting a bridged tap and/or increased noise due to poor pair balance in a telecommunication line.

The published patent application US 2009/0225821 A1 discloses methods and apparatus to detect an imbalanced subscriber line.

### Summary

The object of the present invention is to provide a method and device for assessing electrical characteristics of a telecommunication line, in particular assessing whether or not the line is sufficiently balanced, that is accurate and inexpensive.

The invention is defined by a method for assessment of a telecommunication line according to claim 1 and a device for assessment of a telecommunication line according to claim 7. Moreover, a monitoring station according to claim 9 and a computer program product according to claim 10 are provided.

According to an embodiment of the present invention, a method for assessment of a telecommunication line is provided, the telecommunication line comprising a wire pair for differential signaling, the method comprising determining measurement data, the measurement data describing a frequency dependent function, wherein values of the frequency dependent function depend on at least one transmission characteristic of the telecommunication line; searching for local minima in the frequency depending function; and in case that at least one local minimum has been found, determining the frequency of the at least one local minimum (i.e., the location of the at least one local minimum in the frequency domain) and deciding based on the frequency of said minimum on whether or not the at least one local minimum is caused by insufficient balance of the line.

By not only checking the frequency dependent function in a frequency range needed for data transmission over the line but also analyzing the location of local minima in a wider frequency domain, the method can determine more information about the cause of defects of the line. In particular insufficient balance of the line can be distinguished from bridged taps. Bridged taps can quite easily be removed whereas insufficient balance requires an expensive, in most cases uneconomical, replacement of the line. A network operator may use the method for deciding on whether or not a certain telecommunication line should be upgraded to high bit rate DSL services line VDSL2 or G.Fast.

In an embodiment, the deciding comprises calculating a length of a hypothetical bridged tap from the frequency of the at least one local minimum, comparing the calculated length with a threshold and deciding that the at least one local minimum is caused by insufficient balance if a result of said comparing is that the calculated length is less than or equal to the threshold. In a preferred embodiment, the threshold is less than the minimum length of any bridged tap that may be present in a certain network or in any possible network that be installed by a certain operator, in a certain region or even worldwide. For example, the threshold may be a value between 0.5 m and 10 m, preferably, between 2 m to 5 m.

In an embodiment, the deciding comprises, in case that multiple local minima have been found, verifying whether the frequencies of the local minima correspond to a pattern indicating the presence of at least one bridged tap. Multiple minima occur, for instance, in cases where the first local minimum has a rather low frequency (i.e. location in the frequency domain) and/or the bandwidth of the signal to be transmitted over the line using the high bit rate service to be installed is high.

In a preferred embodiment, the pattern corresponds to a first local minimum being located at a base frequency and further local minima being located at odd multiples of the base frequency.

The frequency dependent function may be any function that characterizes transmission characteristics of the line. Accordingly, in one embodiment, the measurement data include transfer function data describing a direct transfer function of the telecommunication line or a logarithmic representation (Hlog) thereof.

In another embodiment, the measurement data include signal to noise ratio data describing a signal to noise ratio with respect to a signal transmitted over the telecommunication line.

In yet another embodiment, the measurement data include crosstalk data describing a crosstalk transfer function related to crosstalk (FEXT) caused by a further telecommunication line.

According to a further embodiment of the present invention, a device for assessment of a telecommunication line is provided, the telecommunication line comprising a wire pair for differential signaling, wherein the device is operable for determining measurement data, the measurement data describing a frequency dependent function, wherein values of the frequency dependent function depend on at least one transmission characteristic of the telecommunication line; searching for local minima in the frequency depending function; and in case that at least one local minimum has been found, determining the frequency of the at least one local minimum and deciding based on the frequency of said minimum on whether or not the at least one local minimum is caused by insufficient balance of the line.

In an embodiment, the device is operable, preferably programmed, for executing a method according to the invention, embodiment of which method being herein described.

According to another embodiment, a monitoring station for monitoring telecommunication lines of an access network is provided, wherein the monitoring station comprises a device for assessment of a telecommunication line described herein.

According to still another embodiment, a computer program product, preferably a computer readable storage medium is provided, wherein the computer program product comprises a computer program that is programmed for executing a method for assessment of a telecommunication line described herein when run on a computer. The computer may include, e.g., the device for assessment of a telecommunication line described herein. The storage medium may include magnetic (e.g. tapes or discs), optical (e.g. discs) or semiconductor (e.g. RAM, ROM, Flash) memory. In an embodiment, a storage element of the device for assessment of a telecommunication line comprises the storage medium.

**Brief description of the figures**

Exemplary embodiments and further advantages of the present invention are shown in the Figures and described in detail hereinafter.

Figure 1     shows a communication network;
Figure 2     illustrates crosstalk between telecommunication lines of the network shown in Figure 1;

Figure 3    depicts a model of coupling between neighboring telecommunication lines based on a constant distributed capacitance;

Figure 4 - 5    show frequency dependent characteristics of two coupled telecommunication lines calculated based on a standard crosstalk model and on a numerical simulation model, respectively;

Figure 6 - 7    show the characteristics also shown in Figures 4 and 5 calculated in a scenario where the two lines are more tightly coupled;

Figure 8    shows a flow-chart of a method for assessing electrical characteristics of a telecommunication line;

Figure 9    shows a direct transfer function and a crosstalk transfer function of a telecommunication line; and

Figure 10    shows a transfer function in case of an unbalanced line and in case of a line having a bridged tap, respectively.

## Description of the embodiments

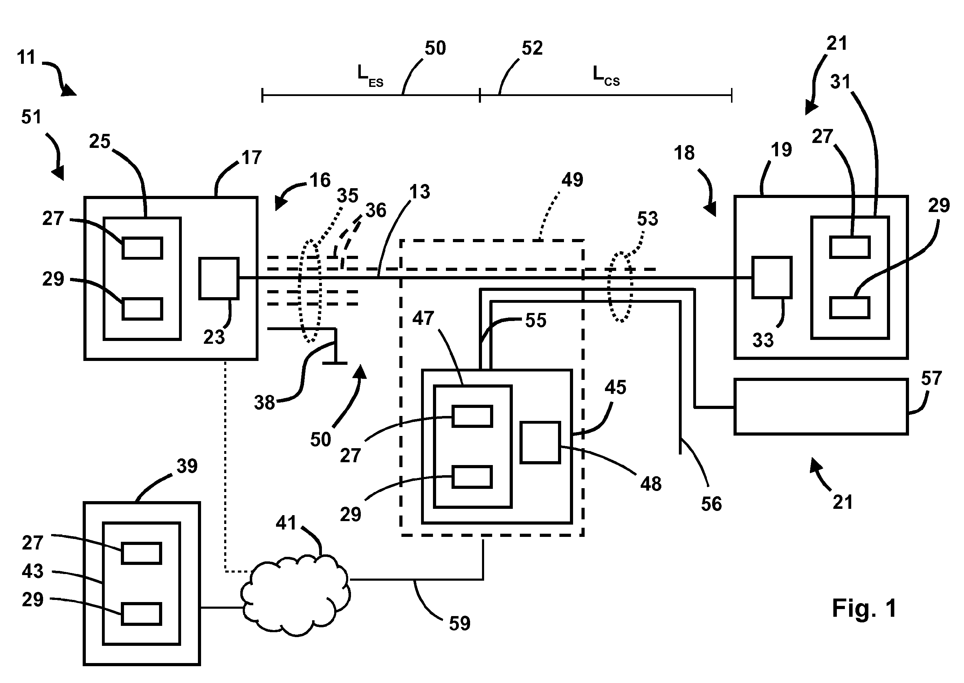

Figure 1 shows a communication network 11 comprising a first telecommunication line 13. A first end 16 of the telecommunication line 13 is connected to a network side termination node of the network 11, further referred to as first access node 17, and a second end 18 of the line 13 is connected to a terminal side termination node 19 of the network 11. The terminal side termination node 19 may be part of customer premises equipment (CPE 21) of the network 11. The terminal side termination node 19 may be a DSL modem or include a DSL modem.

The access node 17 has first modem circuitry 23 to which the first end 16 of the first line 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the first line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least a section of the first line 13 is part of a first binder 35 and extends in parallel to at least one further telecommunication line 36. The further line 36 may be e.g. a DSL line of any type. The binder 35 may comprise an electrically conductive, preferably metallic, shielding 38 that may be grounded as depicted in Figure 1.

Furthermore, the network 11 may comprise an optional monitoring station 39 connected e. g. via a interconnection network 41 to at least one of the nodes 17, 19 such that the station 39 can communicate with at least one of the nodes 17, 19, preferably the access node 17. The station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server, a personal computer, a handheld computer such as a PDA or cell phone, etc. In an embodiment, the collection and processing of the measurement data may not be done in the cell phone or laptop, but by a platform server. In this embodiment, the phones are clients that can retrieve the results of the collection and processing from the server.

As can be seen in Figure 1, the monitoring station 39 is connected via the interconnection network 41 to a second access node 45 of the network 11. The second access node 45 includes a fourth controller 47. The fourth controller 47 has at least essentially the same configuration as the first controller 25 or the second controller 31. In particular the fourth controller 47 may include a processor 27 and a storage element 29.

The second access node 45 may be located at a remote site of the network, in particular in a cabinet 49. The remote site and the cabinet 49 are located at a different place than a central office 51, where the first access node 17 is located. That is, the remote site including the cabinet 49 are remote with respect to the central office 51. The central office 51 is also referred to as local exchange.

In the shown embodiment, the first line 13 begins at the first access node 17 of the central office 51, goes through the cabinet 49 and ends at the modem 19 of the CPE 21. A first section 50 of the first line 13 between the access node 17 of the central office 51 and the cabinet 49 is usually called exchange side (ES) of the first line 13. A second section 52 of the line 13 between the cabinet 49 and the modem 19 of the CPE 21 is often referred to as customer site (CS) of the line 13. The first section 50 of the first line 13 may extend within the first binder 35 in parallel with least one further telecommunication line 36. The second section 52 of the first line 13 may extend within a second binder 53. Within the second binder 53, the first telecommunication line 13 and/or the at least one further line 36 may run in parallel to at least one second telecommunication line 55. The second telecommunication line 55 is arranged between the second access node 45 and a further DSL modem 57 of the CPE 21 of a further customer. For the sake of simplicity, only one further DSL modem 57 is shown in Figure 1, however multiple further DSL modems 57 may be provided that are connected over further second telecommunication lines with the second access node 45.

Because the access node 17 may be located in a central office 51, the first telecommunication line 13 begins at the central office 51, goes through the cabinet 49 and ends at the customer premises 21. In an embodiment, the cabinet 49 is a passive cross connect connecting a first section 50 of the line 13 arranged between the central office and the cabinet 51 to a second section 52 of the line 13 arranged between the cabinet 49 and the customer premises equipment 21. In particular, the first section 50 of the first telecommunication line 13 may extend within the first binder 35 and the second section 52 of the telecommunication line 13 may extend within a second binder 53, with the second binder 53 being installed between the cabinet 49 and e. g. a building where the CPE 21 is located.

A second telecommunication line 55 starts at the further access node 45, goes through the second binder 53 and ends at a further terminal side termination node 57, e. g. a further DSL modem 57, being part of the CPE 21 of another customer. That is, the second section 52 of the first telecommunication line 13 corresponds to a section of the line 13 where the two lines 13, 55 run at least essentially in parallel within the second binder 53. The further access node 45 may be connected to a high bit rate backhaul link, e.g. an optical link, the resulting access architecture therefore being called Fiber To The Cabinet (FTTC). In another embodiment, the cabinet 49 may be located at a different place. For example, the cabinet 49 may be located in a building where the CPE 21 is located (Fiber To The Building, FTTB). Because the remote site where the cabinet 49 is located is closer to the CPEs 21 than the central office 51, the second telecommunication line 55 is shorter than the first line 13 so that high bit rate services like VDSL or G.Fast can be provided over the second line 55.

As shown in Figure 1, multiple lines may be arranged between the second access node 45 and the CPE 21 of different customers. That is, at least one third telecommunication line 56 may be arranged between the second access node 45 and yet another DSL modem (not shown). At least one of the lines 55, 56 between the further access node 45 and one of the CPE 21 is used for DSL transmissions with a higher maximum bit rate than on the lines 13, 36 between the central office 51 and the respective CPE 21.

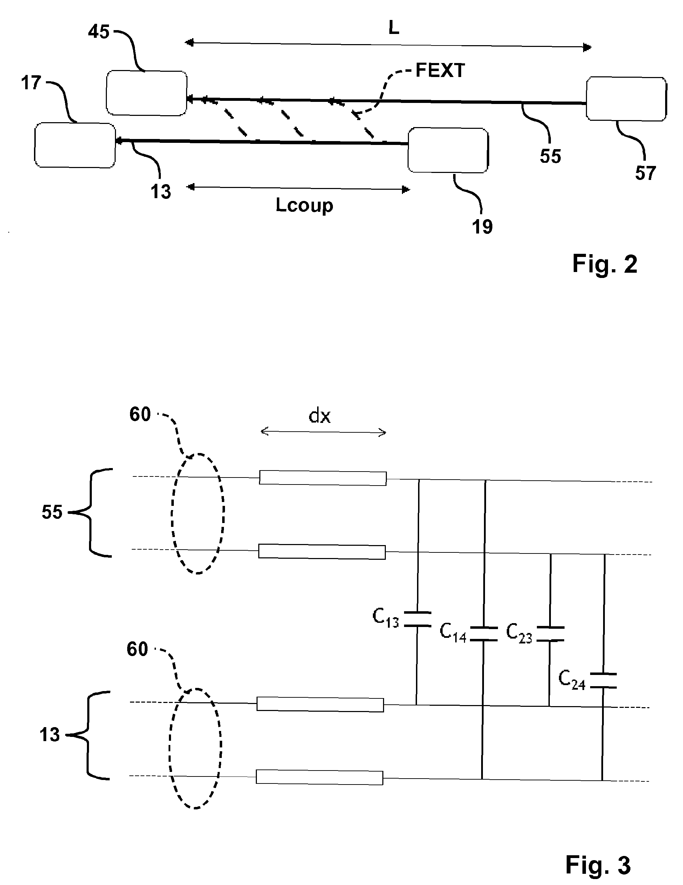

Figure 2 illustrates far-end crosstalk FEXT from one telecommunication line, e. g. the first line 13, to a further telecommunication line, e. g. the second telecommunication line 55. The two lines 13, 55 extend at least in a section in parallel, so that crosstalk between the lines 13, 55 may occur. For example, this section may correspond to the second binder 53. The length of the section where the lines 13, 55 run in parallel so that crosstalk may occur is referred to as coupling length Lcoup. In the exemplary scenario described herein, the coupling length Lcoup corresponds to the length of the second binder 53, which corresponds at least essentially to the customer side length $L_{CS}$. In addition, the total length L of the second line 55 is depicted in Figure 2. For illustrative purposes, an exemplary scenario is described herein where the network comprises a central office and a remote side. However, the present invention is not limited to such a scenario. The invention can be applied in connection with any type of communication network 11 that have multiple communication lines 13, 36, 55, 56 that are arranged such that crosstalk between at least one pair of these lines 13, 36, 55, 56 may occur.

A very common approach to describe crosstalk between telecommunication lines is the standard far-end crosstalk model specified in the standard ANSI T 1.417. The standard model is based on a 99% worst-case far-end crosstalk transfer function which is defined as follows:

$$FextTransferFunction(f)$$
$$= 10\log_{10}(7.74 \cdot 10^{21} \cdot Ndist^{0.6} \cdot Lcoup \cdot f^2) \qquad (1)$$
$$+ Hlog(f)$$

where *Ndist* represents the number of disturbers and *Hlog* represents the transfer function of the victim line. The victim line is the line that is affected by crosstalk caused by a so-called disturbing line. In the exemplary scenario shown in Figure 2, the first line 13 is the disturbing line, and the second line 55 is the victim line.

The crosstalk transfer function of equation (1) provides the ratio of the received noise power at a receiving end of the victim line to the transmitted power of a signal transmitted by a disturber on the disturbing line that will not be exceeded during 99 % of the time, considering standard cables.

The standard model is sufficient to describe the behavior of telecommunication lines used for rather low bit rate DSL services like ADSLx. However, DSL variants offering high bit rates like VDSL2 or G.Fast use a large frequency spectrum that may extend up to 100 MHz or even up to 200 MHz. Classical DSL services like ADSLx use signals on the telecommunication lines that have a maximum frequency of a few MHz only. When using signals on the telecommunication lines that include comparatively high frequencies in their spectrum, then resonance phenomena may occur between coupled lines that cannot be described by the standard crosstalk model. Therefore, a more sophisticated and fine-grained model must be applied.

Such a fine-grained model may be based on a distributed capacitance between coupled wire pairs. A general approach for modeling the far-end crosstalk using capacitive and inductive unbalance between different pairs in a cable is described in detail in the scientific application Pavel Lafata: "Far-end crosstalk modeling based on capacitive and inductive unbalances between pairs in a cable", Information and Communication Technologies and Services, Volume 9, Number 1, March 2011. Although coupling between neighboring transmission lines is caused by both inductive and capacitive unbalances, this scientific publication shows that the total coupling between the two transmission lines can be modeled by an equivalent purely capacitive coupling.

A model that can be used to explain the present invention is depicted in Figure 3. This model is based on the multi-conductor transmission line (MTL) theory and enables the simulation of all propagating modes on multiple coupled transmission lines (two differential modes, one phantom mode and the common mode, when only two lines are considered). The coupled transmission lines are modeled as a cascade of identical unit cells of infinitesimal length $dx$. Each unit cell consists in two pieces of ideal transmission lines (i.e. two perfectly balanced lines 13, 55, each of them comprising a wire pair 60), followed by small capacitances $C_{xy}$ between a wire x and a wire y, where $C_{xy}=C'_{xy}dx$. $C'_{xy}$ is the coupling capacitance per unit length between the wires x and y where x, y $\in$ {1, ..., 2N} and N is the number of coupled lines. Figure 3 shows two coupled lines (N = 2) with the individual wires of a wire pair 60 of the two lines 13, 55 being coupled by coupling capacitances $C_{13}$, $C_{14}$, $C_{23}$, $C_{24}$.

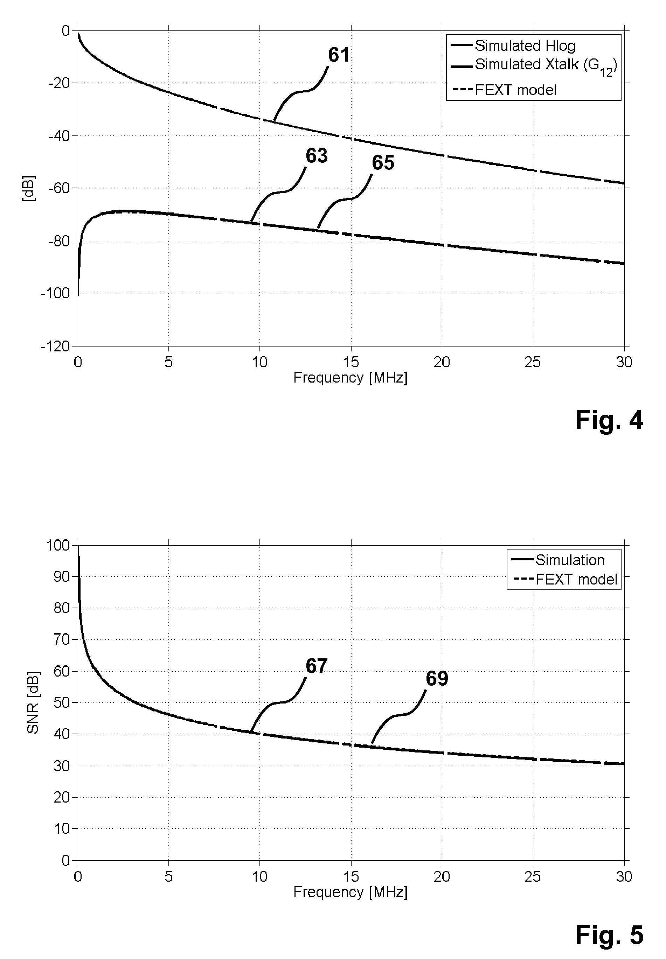

Figure 4 and 5 show simulation results from the numerical simulation model and the standard crosstalk model for the case of two coupled VDSL2 lines having a length of 500 m. The simulations have been performed for frequencies up to 30 MHz. A transfer function Hlog obtained using the numerical simulation model is depicted as a curve 61. A curve 63 corresponds to crosstalk $G_{12}$ between the two coupled VDSL2 lines obtained by using the numerical simulation model. A further curve 65 shows the crosstalk obtained by using the standard crosstalk model. As can be seen in Figure 4, the crosstalk transfer function 63 obtained from numerical simulation model corresponds at least essentially to the crosstalk transfer function 65 obtained applying the standard model, i.e. the curves 63 and 65 are at least almost identical. Figure 5 shows a frequency dependant signal-to-noise ratio SNR obtained by applying the numerical simulation model (curve 67) and by applying the standard crosstalk model (curve 69), respectively. Again, the two SNR curves 67, 69 are at least almost identical. That is, in this scenario having rather low frequencies and a moderate coupling between the lines 13, 55, the standard crosstalk model of equation (1) is well-suited to describe the behavior of the coupled lines 13, 55.

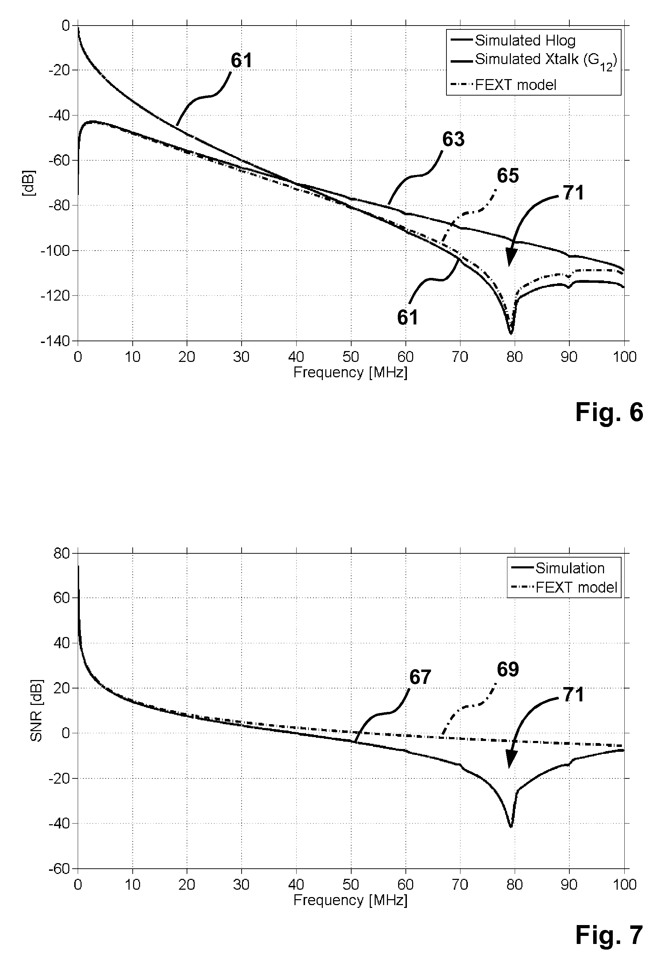

However, when considering a higher crosstalk level and higher frequencies, the standard model does not reflect the actual behavior of the telecommunication lines 13, 55 anymore. Figures 6 and 7 show the same characteristics of the line as Figures 4 and 5. However, a rather high crosstalk level, corresponding to poor cable quality (number of disturbers n=20 000 in equation (1)) is considered. In addition, a higher frequency range up to 100 MHz, corresponding to the G.Fast frequency range is considered. For the individual curves, the same reference signs 61, 63, 65, 67, 69 as in Figure 4 and 5 are used. It can be seen on Figure 6, that the crosstalk level is around 30 dB higher than in Figure 4 and that the transfer function Hlog (curve 61) now exhibits local minimum 71 around 80 MHz, also referred to as "dip", which is caused by a resonance due to the coupling between the lines 13, 55. Because of the resonance, the simulated signal-to-noise ratio SNR (see Figure 7) exhibits a relatively wide local minimum centered around about 80 MHz too. However, according to the standard crosstalk model, this resonance has no impact on the computed signal-to-noise ratio SNR (see curve 69 in Figure 7). This can be understood by looking at equation (1) showing that the crosstalk transfer function is directly proportional to the direct transfer function Hlog. In other words, the standard crosstalk model cannot be used to accurately predict the performance of DSL data transmission in case of strongly coupled lines and/or at frequencies higher that few tens of Megahertz. In this case, the standard model overestimates the signal-to-noise ratio SNR in a quite broad frequency band, representing around 50 % of the total spectrum of 100 MHz used e.g. by G.Fast.

The above-described numerical model shows that for poorly balanced telecommunication lines and/or moderately coupled lines at high frequencies, the transmission function Hlog exhibits resonances which may significantly impact the performance of DSL transmission systems relying on the affected frequency range. In order to be able to detect and isolate problems caused by these resonances when using such DSL systems, a method is proposed that allows detecting whether or not a certain telecommunication line is sufficiently balanced so that this telecommunication line is compatible with these DSL transmission systems. On the one hand, if the transfer function of some lines exhibits resonances, the bit rate on the line cannot be increased by vectoring and/or by applying G.Fast. In such cases, it may not be useful to deploy vectoring, G.Fast or other technologies requiring even more bandwidth on these lines. On the other hand, the method allows detecting lines that are suitable for an upgrade to future systems based on G.Fast or to install vectoring capable access nodes at the respective central office 51 or cabinet 49. In other words, detection of these resonances could help an operator of the network 11 in predicting the performance of vectoring or G.Fast applied on a certain line and determining whether or not a given line is sufficiently balanced for the deployment of the above-mentioned novel technologies.

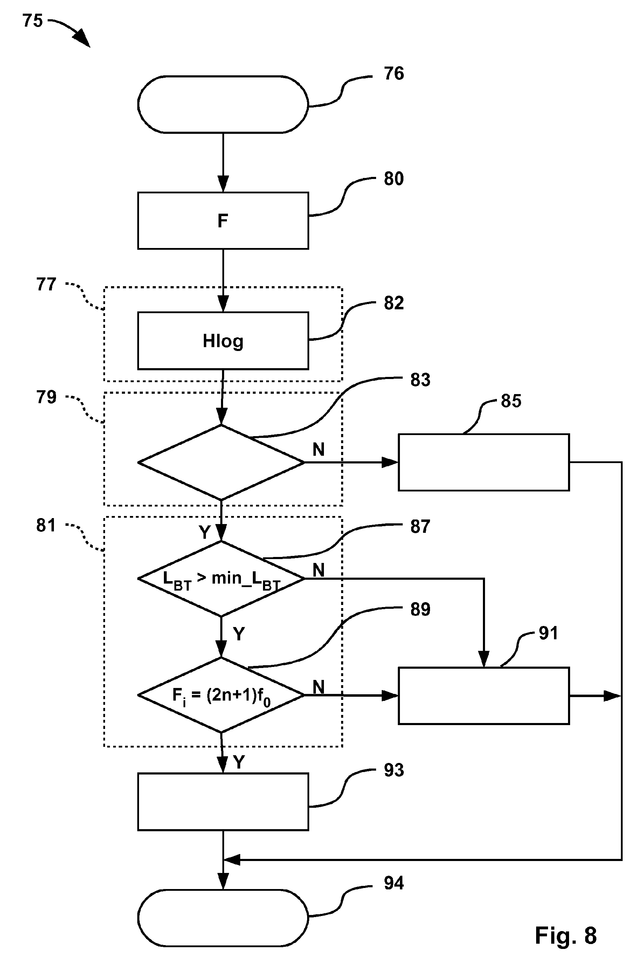

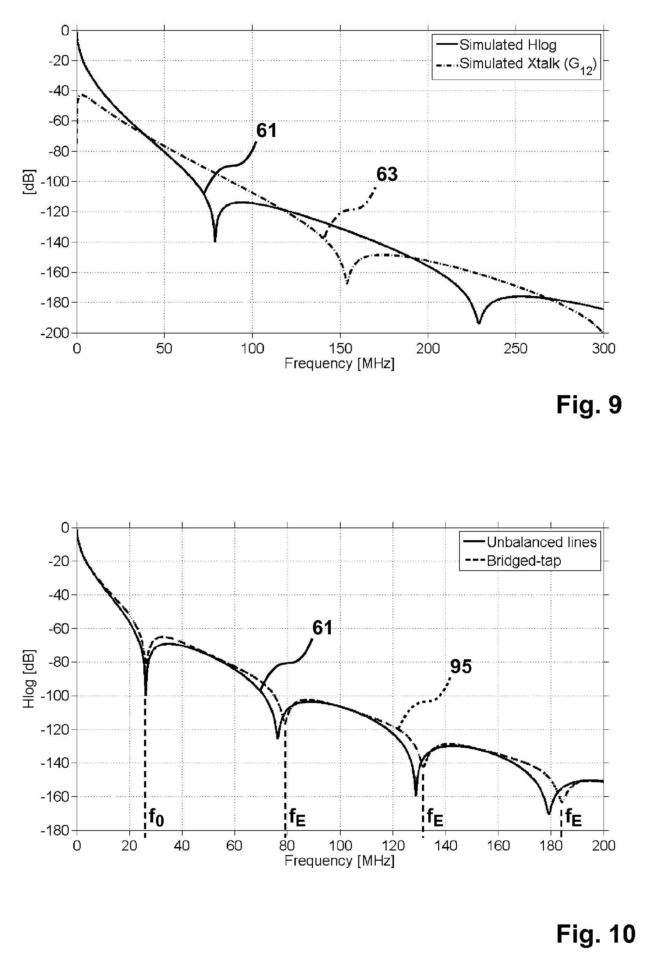

An exemplary embodiment of the method 75 is shown in Figure 8 in the form of a flowchart. The method 75 may executed e.g. on the monitoring station 39; the storage element 29 of the third controller 43 of the monitoring station may be programmed accordingly. As can be seen in Figure 9, the method 75 comprises a measurement block 77 for determining measurement data describing a frequency dependent function that depends on transmission characteristics of the telecommunication line. Furthermore, the method 75 comprises a detection block 79 for detecting resonances. A resonance may be detected if a local minimum (dip) has been found in the frequency dependant function. Finally, the method 75 comprises an identification block 81 for deciding based on the frequency of at least one local minimum found in the detection block 79 on whether or not the at least one minimum is caused by insufficient balance of the line.

After a start 76, the method 75 executes a step 80 for determining a frequency range F. The frequency range F may correspond to the frequency range occupied by a signal of a DSL variant that is planned to be used in connection with the line. For example, when the operator considers using VDSL2 on the line, the frequency range F may include all frequencies from zero to up to about 30 MHz. For G.Fast, the upper limit of the frequency range may be e.g. 100 MHz or even 200 MHz. If the operator considers multiple DSL variants as candidates to be deployed, the method 75 may be executed multiple times with different frequency ranges F determined in step 80. After having determined the frequency range F, the method 75 continues with the measurement block 77.

In the shown embodiment, the measurement block 77 comprises a step 82 of determining measurement data describing a direct transfer function Hlog of the considered line 13, 55. That is, in the shown embodiment, the frequency dependant function is the direct transfer function Hlog and the transmission characteristic is the frequency response of the line 13, 55. Determining the measurement data may include retrieving the measurement data from a node connected directly to the line 13, 55, e. g. from an access node 17, 45 or from a DSL modem 19.

Instead of the direct transfer function Hlog, any other frequency dependent function describing a characteristic of the line 13, 55 may be used. For example, measurement data may be determined that are based on a direct measurement of the signal-to-noise ratio SNR or on the crosstalk transfer function instead of the direct transfer function. As can be seen in Figure 7, a signal-to-noise ratio SNR also has resonances 71 in case of line unbalance (see curve 67). Moreover, the crosstalk transfer function (curve 63) also has resonances similar to the direct transfer function Hlog. However, the frequencies where the resonances of the crosstalk transfer function occur differ from the frequencies of the resonances of the direct transfer function Hlog. Figure 9 shows simulation results for the same 500 m lines as in Figure 6 and 7 but on an increased frequency range. Figure 9 shows the curve 61 describing the direct transfer function Hlog and the curve 63 describing the crosstalk transfer function$G_{12}$. Both curves 61, 63 have local minima resulting from resonances but the local minima are located at different frequencies.

The detection block 79 comprises a step 83 for searching for local minima (dips 71) in the frequency-dependent function described by the measurement data. The search may be restricted to frequencies belonging to the frequency range F. If no local minima are detected (N) then a step 85 is executed for detecting that the line 13, 55 is sufficiently balanced.

If at least one local minimum has been detected (Y) then the operations of the identification block 81 are performed in order to decide on whether or not the at least one local minimum is caused by insufficient balance of the line 13, 55. For example, a bridged-tap on a line 13, 55 may also cause local minima even if the line is perfectly balanced. Therefore, the identification block 81 needs to distinguish local minima caused by a bridged-tap from those caused by a line unbalance.

A bridged-tap of length L causes periodic local minima in the direct transfer function Hlog at frequencies corresponding to odd multiples of $c/(4L_{BT})$. Hence,

$$f_{BT} = (2n+1)\frac{c}{4L_{BT}}, \qquad\qquad (2)$$

where c is the phase velocity of the line and $L_{BT}$ is the length of the bridged-tap. If one or several local minima are detected in the direct transfer function Hlog, assuming that these local minima are caused by a bridged-tap, the tap would have a length that corresponds to $L_{BT} = c/(4f_0)$, where $f_0$ is the frequency of the first local minimum, i.e. the local minimum having the lowest frequency $f_0$. As described above, low to moderately unbalanced lines have a first local minimum at relatively high frequency. When considering the example of Figure 6 and 7, the local minimum caused by the resonance is located at a frequency around about 80 MHz. This local minimum would correspond, if it were caused by a bridged-tap, to a tap length of around $L_{BT} = 63$ cm. Such a small tap length $L_{BT}$ would most likely be quite unrealistic in most networks. Therefore, the identification block 81 calculates in a step 87 the length $L_{BT}$ of a hypothetical bridged-tap, preferably from the frequency $f_0$ of the first local minimum, and compares the calculated length $L_{BT}$ with a threshold min_$L_{BT}$. If the length $L_{BT}$ of the hypothetical bridged-tap is greater than the threshold min_$L_{BT}$ (Y) then a step 89 is executed. Otherwise (N), a step 91 is executed for determining that the line 13, 55 is insufficiently balanced.

Step 89 checks whether positions of the local minima in the frequency domain correspond to a pattern indicating the presence of at least one bridged-tap. More specifically, step 89 checks whether there is a first local minimum located at a base frequency $f_0$ and further local minima being located at odd multiples $f_E = (2n+1) f_0$, n = 1, 2, ... of the base frequency $f_0$. If this pattern of frequencies $f_E$ of the individual local minima corresponding to odd multiples of the base frequency $f_0$ has been detected in step 89, then (Y) a step 93 is executed for detecting that the line 13, 55 has a bridged-tap rather than insufficient balance. In case of a bridged-tap, the operator of the network 11 may locate and remove the bridged-tap in the hope that the line 13, 55 is then compatible with high bit rate DSL services like VDSL2 and/or G.Fast. Otherwise (N), step 91 is executed and an insufficient line balance is detected. The method 75 is terminated after step 85, 91 and 93 in a termination step 94.

The second step 89 of the identification block 81 allows for distinguishing a bridged-tap from insufficient line balance in cases of longer lines or in case of comparatively strong unbalance. In this case, the first resonance may appear at a rather low frequency $f_0$. Thus, it is likely that several minima will be visible in the frequency range F over which the direct transfer function Hlog was measured and/or retrieved in the measurement block 77. Such an example is shown in Figure 11. The solid line 61 shows the direct transfer function Hlog in case of an unbalanced line 13, 55. The scenario shown in Figure 10 is related to a 500 m line with a quite strong unbalance causing the first local minimum around $f_0$ = 26.6 MHz. If this resonance was caused by a bridged-tap, the hypothetical bridged-tap would have a length of $L_{BT}$ = 1.88 m. In an embodiment, the threshold min_$L_{BT}$ may be greater than the calculated length $L_{BT}$ = 1.88 m and step 87 may not detect the unbalance. Figure 13 also shows (dashed line 95) the simulated direct transfer function Hlog for the 500 m line that is perfectly balanced but has a bridged-tap whose length is 1.88m. The positions of the successive local minima in the direct transfer function Hlog are different for these two curves 61, 95. Only curve 95 has local minima $f_0$, $f_E$ that are located in the frequency domain according to the above-described pattern. Therefore, step 89 of the identification block 81 of the method 75 will identify a bridged tap if the measurement data describe the curve 91 and detect an insufficient balance if the measurement data describe the curve 61.

To sum up, the method described herein allows not only for estimating whether a certain telecommunication line 13, 55 is suitable for high bit rate DSL services like VDSL2 or G.Fast but also allows - in case of an unsuitable line - for checking whether the cause of the insufficient quality of the line is the insufficient balance of the line or the presence of a bridged-tap. In case of a bridged-tap, the network operator may remove the bridged-tap and perform the method 75 again on the line with the bridged-tap removed. In case of insufficient balance of the line 13, 55, the network operator may conclude that it is unlikely that high bit rate services like VDSL2 or G.Fast can be used on that line and may refrain from installing respective network equipment. Basically, the method 75 measures the frequency dependent function and detects the local minima in the function. If local minima are present within the frequency band used for VDSL2, the line 13, 55 may not be sufficiently balanced to get a significant gain in terms of maximum bit rate with vectoring, and is not a good candidate for an upgrade to G.Fast. If dips are present above the frequency band used for VDSL2 but within the band used for G.Fast, vectoring could help increasing the line performance or bit rate but the line may not be suitable for G.Fast. If no local minima are present below e. g. 100 MHz or 200 MHz, the line 13, 55 is sufficiently balanced for G.Fast deployment. If local minima are detected, the method allows for deciding on whether or not the removal of a bridged-tap might help to improve the quality of the line 13, 55.

## Claims

1. Method (75) for assessment of a telecommunication line (13, 55), the telecommunication line (13, 55) comprising a wire pair (60) for differential signaling, the method (75) comprising

   - determining (77) measurement data, the measurement data describing a frequency dependent function (Hlog), wherein values of the frequency dependent function depend on at least one transmission characteristic of the telecommunication line (13, 55);
   - searching (79) for local minima (71) in the frequency depending function; and
   - in case that at least one local minimum (71) has been found, determining (81) the frequency of the at least one local minimum (71);

   **characterized in that** the method (75) comprises

   - deciding (81) based on the frequency of said minimum (71) on whether or not the at least one local minimum (71) is caused by insufficient balance of the line (13, 55), wherein the deciding (81) comprises calculating a length ($L_{BT}$) of a hypothetical bridged tap from the frequency ($f_0$) of the at least one local minimum (71), comparing (87) the calculated length ($L_{BT}$) with a threshold (min_$L_{BT}$) and deciding (91) that the at least one local minimum (71) is caused by insufficient balance if a result of said comparing (87) is that the calculated length ($L_{BT}$) is less than or equal to the threshold (min_$L_{BT}$).

2. Method (75) according to claim 1, wherein the deciding (81) comprises, in case that multiple local minima (71) have been found, verifying whether the frequencies ($f_0$, $f_E$) of the local minima (71) correspond to a pattern indicating the presence of at least one bridged tap.

3. Method (75) according to claim 2, wherein the pattern corresponds to a first local minimum being located at a base frequency ($f_0$) and further local minima being located at odd multiples ($f_E$) of the base frequency ($f_0$).

4. Method (75) according to one of the precedent claims, wherein the measurement data include transfer function data describing a direct transfer function (Hlog) of the telecommunication line (13, 55).

5. Method (75) according to one of the precedent claims, wherein the measurement data include signal to noise ratio data describing a signal to noise ratio with respect to a signal transmitted over the telecommunication line (13, 55).

6. Method (75) according to one of the precedent claims, wherein the measurement data include crosstalk data describing a crosstalk transfer function related to crosstalk (FEXT) caused by a further telecommunication line.

7. Device (25, 31, 43) for assessment of a telecommunication line (13, 55), the telecommunication line (13, 55) comprising a wire pair (60) for differential signaling, wherein the device (25, 31, 43) is operable for

- determining (77) measurement data, the measurement data describing a frequency dependent function (Hlog), wherein values of the frequency dependent function depend on at least one transmission characteristic of the telecommunication line (13, 55);
- searching (79) for local minima (71) in the frequency depending function; and
- in case that at least one local minimum (71) has been found, determining the frequency of the at least one local minimum;

**characterized in that** the device (25, 31, 43) is operable for

- deciding (81) based on the frequency of said minimum (71) on whether or not the at least one local minimum (71) is caused by insufficient balance of the line (13, 55), wherein the deciding (81) comprises calculating a length ($L_{BT}$) of a hypothetical bridged tap from the frequency ($f_0$) of the at least one local minimum (71), comparing (87) the calculated length ($L_{BT}$) with a threshold (min_$L_{BT}$) and deciding (91) that the at least one local minimum (71) is caused by insufficient balance if a result of said comparing (87) is that the calculated length ($L_{BT}$) is less than or equal to the threshold (min_$L_{BT}$).

8. Device (25, 31, 43) according to claim 7, wherein the device is operable, preferably programmed, for executing a method (75) according to one of claims 1 to 7.

9. Monitoring station (39) for monitoring telecommunication lines (13, 55) of an access network (11), wherein the monitoring station (39) comprises a device (25, 31, 43) according to claim 7 or 8.

10. Computer program product, preferably a computer readable storage medium (29), wherein the computer program product comprises a computer program that is programmed for executing a method (75) according to one of claims 1 to 6 when run on a computer (25, 31, 43).

**Patentansprüche**

1. Verfahren (75) zur Beurteilung einer Telekommunikationsleitung (13, 55), wobei die Telekommunikationsleitung (13, 55) ein Drahtpaar (60) für die differentielle Signalisierung umfasst, wobei das Verfahren (75) umfasst:

- das Bestimmen (77) von Messdaten, wobei die Messdaten eine frequenzabhängige Funktion (Hlog) beschreiben, wobei Werte der frequenzabhängigen Funktion von mindestens einer Übertragungscharakteristik der Telekommunikationsleitung (13, 55) abhängen;
- das Suchen (79) nach lokalen Minima (71) in der frequenzabhängigen Funktion; und
- in dem Fall, dass mindestens ein lokales Minimum (71) gefunden wurde, das Bestimmen (81) der Frequenz des mindestens einen lokalen Minimums (71);

**dadurch gekennzeichnet, dass** das Verfahren (75) weiterhin umfasst:

- das auf der Grundlage besagten Minimums (71) erfolgende Entscheiden (81), ob das mindestens eine lokale Minimum (71) durch einen unzureichenden Ausgleich der Leitung (13, 55) verursacht ist oder nicht, wobei das Entscheiden (81) das Berechnen der Länge ($L_{BT}$) eines hypothetischen, gebrückten Abgriffs ($f_0$) des mindestens einen lokalen Minimums (71), das Vergleichen (87) der berechneten Länge ($L_{BT}$) mit einem Grenzwert (min_$L_{BT}$) und das Entscheiden (91) umfasst, dass das mindestens eine lokale Minimum (71) dann von einem unzureichenden Ausgleich verursacht ist, wenn ein Ergebnis besagten Vergleichens (87) dergestalt ausfällt, dass die berechnete Länge ($L_{BT}$) kleiner oder gleich dem Grenzwert (min_$L_{BT}$) ist.

2. Verfahren (75) nach Anspruch 1, wobei das Entscheiden (81) in dem Fall, dass multiple lokale Minima (71) gefunden wurden, das Verifizieren umfasst, ob die Frequenzen ($f_0$, $f_E$) der lokale Minima (71) einem Muster entsprechenden, welches das Vorhandensein mindestens eines gebrückten Abgriffs indiziert.

3. Verfahren (75) nach Anspruch 2, wobei das Muster einem ersten lokales Minimum entspricht, welches bei einer Grundfrequenz ($f_0$) liegt, und weitere lokale Minima bei ungeraden Vielfachen ($f_E$) der Grundfrequenz ($f_0$) liegen.

4. Verfahren (75) nach einem der vorgenannten Ansprüche, wobei die Messdaten Übertragungsfunktionsdaten umfassen, welche eine Direktübertragungsfunktion (Hlog) der Telekommunikationsleitung (13, 55) beschreiben.

5. Verfahren (75) nach einem der vorgenannten Ansprüche, wobei die Messdaten Signal-Rausch-Verhältnis-Daten umfassen, die ein Signal-Rausch-Verhältnis bezüglich eines Signals beschreiben, welches über die Telekommunikationsleitung (13, 55) übermittelt wird.

6. Verfahren (75) nach einem der vorgenannten Ansprüche, wobei die Messdaten Übersprechdaten umfassen, welche eine Übersprechübertragungsfunktion im Zusammenhang mit einem Fernübersprechen (FEXT) beschreiben, das von einer weiteren Telekommunikationsleitung verursacht wird.

7. Vorrichtung (25, 31, 43) zur Beurteilung einer Telekommunikationsleitung (13, 55), wobei die Telekommunikationsleitung (13, 55) ein Drahtpaar (60) für die differentielle Signalisierung umfasst, wobei die Vorrichtung (25, 31, 43) ausgelegt ist für:

- das Bestimmen (77) von Messdaten, wobei die Messdaten eine frequenzabhängige Funktion (Hlog) beschreiben, wobei Werte der frequenzabhängigen Funktion von mindestens einer Übertragungscharakteristik der Telekommunikationsleitung (13, 55) abhängen;
- das Suchen (79) nach lokalen Minima (71) in der frequenzabhängigen Funktion; und
- in dem Fall, dass mindestens ein lokales Minimum (71) gefunden wurde, das Bestimmen der Frequenz des mindestens einen lokalen Minimums;

**dadurch gekennzeichnet, dass** die Vorrichtung (25, 31, 43) betriebsbereit ist für

- das auf der Grundlage besagten Minimums (71) erfolgende Entscheiden (81), ob das mindestens eine lokale Minimum (71) durch einen unzureichenden Ausgleich der Leitung (13, 55) verursacht ist oder nicht, wobei das Entscheiden (81) das Berechnen der Länge ($L_{BT}$) eines hypothetischen, gebrückten Abgriffs ($f_0$) des mindestens einen lokalen Minimums (71), das Vergleichen (87) der berechneten Länge ($L_{BT}$) mit einem Grenzwert (min_$L_{BT}$) und das Entscheiden (91) umfasst, dass das mindestens eine lokale Minimum (71) dann von einem unzureichenden Ausgleich verursacht ist, wenn ein Ergebnis besagten Vergleichens (87) dergestalt ausfällt, dass die berechnete Länge ($L_{BT}$) kleiner oder gleich dem Grenzwert (min_$L_{BT}$) ist.

8. Vorrichtung (25, 31, 43) nach Anspruch 7, wobei die Vorrichtung für das Durchführen eines Verfahrens (75) gemäß einem der Ansprüche 1 bis 7 betriebsbereit ist, vorzugsweise durch Programmierung.

9. Überwachungsstation (39) für die Überwachung von Telekommunikationsleitungen (13, 55) eines Zugangsnetzwerks (11), wobei die Überwachungsstation (39) eine Vorrichtung (25, 31, 43) nach den Ansprüchen 7 oder 8 umfasst.

10. Computerprogramm-Produkt, vorzugsweise ein computerlesbares Speichermedium (29), wobei das Computerprogramm-Produkt ein Computerprogramm umfasst, welches programmiert ist für die Durchführung eines Verfahrens (75) gemäß einem der Ansprüche 1 bis 6, wenn es auf dem Computer (25, 31, 43) ausgeführt wird.


**Revendications**

1. Procédé (75) d'évaluation d'une ligne de télécommunication (13, 55), la ligne de télécommunication (13, 55) comprenant une paire de fils (60) pour la signalisation différentielle, le procédé (75) comprenant les étapes suivantes

- déterminer (77) des données de mesure, les données de mesure décrivant une fonction dépendant de la fréquence (Hlog), dans lequel les valeurs de la fonction dépendant de la fréquence dépendent d'au moins une caractéristique de transmission de la ligne de télécommunication (13, 55) ;
- rechercher (79) des minima locaux (71) dans la fonction dépendant de la fréquence ; et
- si au moins un minimum local (71) a été trouvé, déterminer (81) la fréquence de l'au moins un minimum local (71) ;

**caractérisé en ce que** le procédé (75) comprend les étapes suivantes

- décider (81) en fonction de la fréquence dudit minimum (71) si l'au moins un minimum local (71) est dû ou non à un équilibre insuffisant de la ligne (13, 55), la décision (81) comprenant le calcul d'une longueur ($L_{BT}$) d'un branchement en dérivation hypothétique à partir de la fréquence ($f_0$) de l'au moins un minimum local (71), comparer (87) la longueur calculée ($L_{BT}$) à un seuil (min_$L_{BT}$) et décider (91) que l'au moins un minimum local (71) est dû à un équilibre insuffisant si un résultat de ladite comparaison (87) est que la longueur calculée ($L_{BT}$) est inférieure ou égale au seuil (min_$L_{BT}$).

2. Procédé (75) selon la revendication 1, dans lequel la décision (81) consiste, si de multiples minima locaux (71) ont été trouvés, à vérifier si les fréquences ($f_0$, $f_E$) des minima locaux (71) correspondent à un modèle indiquant la présence d'au moins un branchement en dérivation.

3. Procédé (75) selon la revendication 2, dans lequel le modèle correspond à un premier minimum local situé à une fréquence de base ($f_0$) et des minima locaux supplémentaires situés à des multiples impairs ($f_E$) de la fréquence de base ($f_0$).

4. Procédé (75) selon l'une des revendications précédentes, dans lequel les données de mesure comprennent des données de fonction de transfert décrivant une fonction de transfert direct (Hlog) de la ligne de télécommunication (13, 55).

5. Procédé (75) selon l'une des revendications précédentes, dans lequel les données de mesure comprennent des données de rapport signal sur bruit décrivant un rapport signal sur bruit par rapport à un signal transmis sur la ligne de télécommunication (13, 55).

6. Procédé (75) selon l'une des revendications précédentes, dans lequel les données de mesure comprennent des données de diaphonie décrivant une fonction de transfert de diaphonie relative à la diaphonie (FEXT) due à une ligne de télécommunication supplémentaire.

7. Dispositif (25, 31, 43) d'évaluation d'une ligne de télécommunication (13, 55), la ligne de télécommunication (13, 55) comprenant une paire de fils (60) pour la signalisation différentielle, le dispositif (25, 31, 43) peut être utilisé pour

- déterminer (77) des données de mesure, les données de mesure décrivant une fonction dépendant de la fréquence (Hlog), dans lequel les valeurs de la fonction dépendant de la fréquence dépendent d'au moins une caractéristique de transmission de la ligne de télécommunication (13, 55) ;
- rechercher (79) des minima locaux (71) dans la fonction dépendant de la fréquence ; et
- si au moins un minimum local (71) a été trouvé, déterminer la fréquence de l'au moins un minimum local ;

**caractérisé en ce que** le dispositif (25, 31, 43) peut être utilisé pour

- décider (81) en fonction de la fréquence dudit minimum (71) si l'au moins un minimum local (71) est dû ou non à un équilibre insuffisant de la ligne (13, 55), la décision (81) comprenant le calcul d'une longueur ($L_{BT}$) d'un branchement en dérivation hypothétique à partir de la fréquence ($f_0$) de l'au moins un minimum local (71), comparer (87) la longueur calculée ($L_{BT}$) à un seuil (min_$L_{BT}$) et décider (91) que l'au moins un minimum local (71) est dû à un équilibre insuffisant si un résultat de ladite comparaison (87) est que la longueur calculée ($L_{BT}$) est inférieure ou égale au seuil (min_$L_{BT}$).

8. Dispositif (25, 31, 43) selon la revendication 7, dans lequel le dispositif peut être utilisé, et de préférence programmé, pour exécuter un procédé (75) selon l'une des revendications 1 à 7.

9. Station de surveillance (39) pour surveiller les lignes de télécommunication (13, 55) d'un réseau d'accès (11), la station de surveillance (39) comprenant un dispositif (25, 31, 43) selon la revendication 7 ou 8.

10. Produit de programme informatique, de préférence un support de stockage lisible par ordinateur (29), le produit de programme informatique comprenant un programme informatique qui est programmé pour exécuter un procédé (75) selon l'une des revendications 1 à 6 lorsqu'il est exécuté sur un ordinateur (25, 31, 43).

Fig. 1

EP 2 824 844 B1

**Fig. 2**

**Fig. 3**

Fig. 4

Fig. 5

**Fig. 6**

**Fig. 7**

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090225821 A1

**Non-patent literature cited in the description**

- **PAVEL LAFATA.** Far-end crosstalk modeling based on capacitive and inductive unbalances between pairs in a cable. *Information and Communication Technologies and Services,* March 2011, vol. 9 (1